**Europäisches Patentamt**

**European Patent Office**

**Office européen des brevets**

(11) Veröffentlichungsnummer : **0 080 604 B2**

(12) **NEUE EUROPÄISCHE PATENTSCHRIFT**

(45) Veröffentlichungstag der neuen Patentschrift :
**19.08.92 Patentblatt 92/34**

(21) Anmeldenummer : **82110143.3**

(22) Anmeldetag : **04.11.82**

(51) Int. Cl.⁵ : **B24D 3/00,** B24D 3/14,
B24D 3/34, C09K 3/14,
C04B 14/32, C08K 3/14,
C08K 3/20

(54) **Korund-Schleifkorn mit keramischer Ummantelung.**

Die Akte enthält technische Angaben, die nach
dem Eingang der Anmeldung eingereicht
wurden und die nicht in dieserPatentschrift
enthalten sind.

(30) Priorität : **02.12.81 DE 3147597**

(43) Veröffentlichungstag der Anmeldung :
**08.06.83 Patentblatt 83/23**

(45) Bekanntmachung des Hinweises auf die
Patenterteilung :
**28.01.87 Patentblatt 87/05**

(45) Bekanntmachung des Hinweises auf die
Entscheidung über den Einspruch :
**19.08.92 Patentblatt 92/34**

(84) Benannte Vertragsstaaten :
**AT DE FR GB IT**

(56) Entgegenhaltungen :
**EP-A- 0 014 236**
**CH-A- 619 885**
**US-A- 2 358 313**
**US-A- 2 527 044**
**US-A- 3 269 815**

(73) Patentinhaber : **HÜLS**
**AKTIENGESELLSCHAFT**
**Paul-Baumann-Strasse 1**
**W-4370 Marl 1 (DE)**

(72) Erfinder : **Brüning, Klaus**
**Simrockstrasse 39**
**W-5342 Rheinbreitbach (DE)**
Erfinder : **Rehfeld, Gerhard, Dr.**
**Bismarckstrasse 87**
**W-5100 Aachen (DE)**

Jouve, 18, rue Saint-Denis, 75001 PARIS

EP 0 080 604 B2

**Beschreibung**

Die Erfindung betrifft ein Korund-Schleifkorn mit keramischer Ummantelung aus 0,25 bis 2 Gew.-%, bezogen auf das Gewicht des unbehandelten Kornes, einer gemahlenen Glasfritte, einem Bindemittel und 1 bis 5 Gew.-% eines schleifaktiven Feinkorns in der Ummantelung, dessen größte Abmessung 1 bis 10 % des mittleren Durchmessers des Ausgangskornes entspricht.

Ein mit einer relativ glatten, festhaftenden keramischen Ummantelung versehenes Schleifkorn, bei dem die Ummantelung aus einer aufgeschmolzenen Glasfritte besteht und zusätzlich feinverteilte Metalloxidpartikel enthält, die in die Ummantelung so eingebettet sind, dass ein Teil ihrer Oberfläche aus der Ummantelung herausragt, ist in der US-A 2 527 044 beschrieben worden.

In der EP-A 0 014 236 wird ein Verfahren zur Gütebehandlung von Schleifkorn aus $Al_2O_3$, das einen Anteil von Titanoxid aufweist, durch Aufbringen einer keramischen Ummantelung beschrieben. Das Aufschmelzen der Ummantelung und die Umwandlung der Kornstruktur durch Umwandlung der Ti-oxide in die vierwertige Oxidationsstufe erfolgen gleichzeitig während der Temperaturbehandlung von 1250 bis 1350 °C. Weiter wird vorgeschlagen, dem Ummantelungsmaterial einen Zuschlag von Siliziumcarbid (SiC) zuzugeben, der sich bei den angewandten Temperaturen unter Bildung von $CO_2$ bzw. CO und $SiO_2$ bzw. SiO vollständig zersetzt.

Die verbesserte Einbindung von keramisiertem Schleifkorn in Kunstharzbindemitteln wird nach diesem Stand der Technik und auch in der Praxis in der Vergrösserung der spezifischen Oberfläche des Schleifkorns und daraus resultierenden festeren Einbindung in das Kunstharz durch die Verwendung fein- bis feinstkörniger Füllstoffe oder feinverteilter Blasen beim Zusatz von SiC gesehen.

Aus der US-A-3 269 815 ist ein mit einem Glasfilm beschichtetes Schleifkorn bekannt, bei welchem feinverteilte Partikel aus der Gruppe Siliziumcarbid und Siliziumnitrid mittels des Glasfilmes an das Schleifkorn keramisch gebunden sind. Hierbei ist der Glasfilm dünner als die Partikel, so dass diese aus dem Film herausragen. Damit entsteht eine rauhe Beschichtung, welche in der Praxis der Anwendung bezüglich der Festigkeit des Schleifmittels nachteilig ist.

Ziel der vorliegenden Erfindung ist es, gegenüber diesem Stand der Technik eine noch bessere Einbindung des Schleifkornes bei dessen Verarbeitung zu kunstharzgebundenen Schleifmitteln zu erreichen.

Besonders beim Nachschleifen unter Einsatz von kunstharzgebundenen Schleifscheiben oder -bändern, bei dem auf die Kunstharzbindung aggressiv, d. h. aufweichend, wirkende Kühlschmiermittel eingesetzt werden müssen, besteht ein Bedürfnis nach verbesserter Einbindung und höheren Standzeiten bzw. Arbeitsgeschwindigkeiten kunstharzgebundener Schleifmittel.

Anhaltspunkte für das Verhalten von keramisiertem kunstharzgebundenem Schleifkorn beim Nachschleifen ergeben sich insbesondere aus Messungen der Biegebruchfestigkeit von Prüfkörpern aus kunsthargebundenem Schleifkörn, die m Kühlschmiermitteln gelagert werden. Aus solchen Messungen lässt sich der zeitliche Festigkeitsabfall beim Nassschleifen beurteilen.

Die Lösung der Erfindungsaufgabe besteht darin, bei einem Korund-Schleifkorn der angegebenen Art eine grösste Abmessung des Feinkorns von 10 μm mit einer daraus resultierenden im wesentlichen glatten und nahezu porenfreien keramisierten Oberfläche vorzuschlagen.

Hierdurch wird bei der Verwendung in kunstharzgebundenen Nass-Schleifmitteln eine verbesserte Nassschleifleistung erzielt.

Die Herstellung des erfindungsgemässen Korund-Schleifkorns erfolgt nach an sich bekannten Verfahren wie folgt.

Das Schleifkorn, z.B. Elektrokorund, wird in einem Mischer mit einem Bindemittel, z.B. Wasserglas, benetzt.

Anschliessend erfolgt die Zugabe einer feingemahlenen Glasfritte. Für die Ummantelung des Elektrokorunds werden bleifreie Glasurfritten bevorzugt. Bewährt hat sich hinsichtlich der erzielten Festigkeitseigenschaften der Einsatz eines geschmolzenen und nach dem Erkalten gemahlenen Materials der folgenden Zuzammensetzung

| | |
|---|---|
| $SiO_2$ | 27% |
| $B_2O_3$ | 23% |
| $K_2O$ | 19% |
| $Na_2O$ | 12% |
| MgO | 8% |
| $Al_2O_3$ | 7% |
| CaO | 4% |
| BaO | 2% |

mit einer Fritte-Kornverteilung von 0 bis 100 μm.

Der erfindungsgemässe Zusatz von schleifaktivem Feinkorn haftet wie die Glasfritte auf der Oberfläche des benetzten Schleifkornes an. Das zugesetzte schleifaktive Korn weist eine grösste Korngrösse von 10 bis 50 μm auf.

Das so behandelte Schleifkorn wird anschliessend über eine Dosiereinrichtung in einen indirekt beheizten Drehrohrofen gegeben. Bei Temperaturen zwischen 800 und 1050 °C, vorzugsweise 850 bis 950 °C, und Verweilzeiten von 6 bis 20 Minuten erweichen die Partikel der Glasfritte unter Verlaufen an der Oberfläche des Schleifkorns, und es kommt beim anschliessenden Abkühlen unter Verfestigung zur keramischen Ummantelung des Korns unter Einbindung des schleifaktiven Feinkorns in der keramischen Ummantelung der zu ummantelnden Körner.

Die Schichtdicke der erhaltenen keramischen Ummantelung liegt dabei im Bereich von etwa 1 bis 5 μm. Bei Keramisierungsschichten mit einer grösseren Schichtdicke kann es zum Abplatzen vom Schleifkorn kommen.

Das unter Zusatz von schleifaktivem Feinkorn keramisierte erfindungsgemässe Korund-Schleifkorn hat eine im wesentlichen glatte und nahezu porenfreie keramisierte Oberfläche, über die nur ein Teil der in die Keramisierungsschicht eingebetteten schleifaktiven Feinpartikel herausragen. Aus mikroskopischen Aufnahmen der Oberfläche erfindungsgemässer Korund-Schleifkörper ergibt sich, dass glattere bzw. geschlossenere Oberflächen vorliegen als bei im Handel erhältlichem keramisiertem Korund-Schleifkorn, das einen $Fe_2O_3$-Zusatz als Feinkorn in der Ummantelung enthält. Eine noch glattere Oberfläche eines erfindungsgemässen Korund-Schleifkorns erhält man gegenüber dem Zusatz von schleifaktivem Edelkorund beim Zusatz von SiC. Hier ist die Oberfläche zu einem Anteil von höchstens 10% durch Poren unterbrochen. Eine vollständige Zersetzung des zugesetzten SiC-Feinkorns in dem erfindungsgemässen ummantelten Schleifkorn hat allerdings nicht stattgefunden. Insbesondere ist keine Erhöhung der spezifischen Oberfläche des erfindungsgemässen Korns gegenüber einem nichtkeramisierten Korundkorn festgestellt worden. Demgemäss konnte auch gegenüber Material nach dem Stand der Technik, das eine grössere Oberflächenrauhigkeit aufweist, keine bessere Einbindung des Schleifkornes in Kunstharz erwartet werden. Die Festigkeitswerte von Prüfkörpern aus kunstharzgebundenem keramisiertem Schleifkorn nach dem Stand der Technik unterschieden sich bei Trockenlagerung der Prüfkörper kaum von den Festigkeitswerten für das erfindungsgemässe Material. Überraschend ergaben sich für das erfindungsgemässe Material aber erheblich höhere Festigkeitswerte nach Lagerung der Prüfkörper in Kühlschmiermittel. Aufgrund dieser Ergebnisse mit erfindungsgemässem keramisiertem Schleifkorn kann angenommen werden, dass für die Einbindung des Schleifkornes im Kunstharz nicht allein die spezifischen Kornoberflächen von Einfluss sind. Mit dem erfindungsgemässen Material werden nach bekannten Verfahren kunstharzgebundene Schleifkörper hergestellt, die sich durch höhere Standzeiten und Arbeitsgeschwindigkeiten beim Nassschliff auszeichnen. Insbesondere ist bei so hergestellten Schleifscheiben ein Ansteigen der Sprengfestigkeit festzustellen.

Die Erfindung wird nachfolgend anhand von Ausführungsbeispielen erläutert. Das mit feingemahlener Fritte der angegebenen Zusammensetzung und Korngrösse unter Zugabe von wässriger 58-Gew.-%iger Natriumsilikat-Lösung und schleifaktivem Feinkorn vorbehandelte Korund-Schleifkorn wurde in einem Taumel-Mischer gemischt, anschliessend bei 120°C 3 Stunden getrocknet, dann in einem Drehrohrofen bei 950 °C und 8 Minuten Verweilzeit keramisiert. Aus den keramisierten Schleifkörnungen wurden quaderförmige Probekörper mit den Abmessungen 120 x 60 x 20 mm³ unter Verwendung von 2,5 Gew.-% Flüssigharz und 7,5 Gew.-% Festharz hergestellt. Die Aushärtung der Probekörper erfolgte bei 180 °C, die Dichte der Probekörper betrug 2,34 g/cm³. Aus den Probekörpern wurden mit einer Diamantsäge Biegebruchstäbe in den Abmessungen 120 x 20 x 10 mm³ geschnitten.

Die Ermittlung der Biegebruchfestigkeit erfolgte mit einem üblichen Prüfgerät bei einem Auflageabstand von 100 mm und einem Vorschub des Stempels von 3 mm/min. Die Nasslagerung der Prüfkörper erfolgte in Anlehnung an praxisnahe Bedingungen in Wasser mit 2 Gew.-% Kühlschmiermittelzusatz bei 35 °C.

In Tabelle 1 sind die Angaben über die eingesetzten Materialien hinsichtlich Körnung, Wasserglas-Bindemittel, Gehalt an Glasfritte und Feinkornzusatz enthalten, wobei in den zum Vergleich herangezogenen Beispielen nach dem Stand der Technik keramisierte Korundkörnungen sowie nicht oberflächenbehandeltes Material den Messungen unterzogen wurden.

**Tabelle 1**  <span style="float:right">1) n.b. = nicht bekannt</span>

| Beispiel | Material | Körnung | Wasserglas Massenanteil, w % | Fritte w % | Feinkorn w % |
|---|---|---|---|---|---|
| 1 | Edelkorund | 80 P | 1,4 | 0,4 | 1,8; Korund 10–20 µm |
| 1A (Vergleich) | Edelkorund | | – | – | – |
| 1B (Vergleich) | Edelkorund keramisiert | handelsübl. Qualität A | n.b. 1) | n.b. | $Fe_2O_3$ |
| 21 | Edelkorund | 36N | 1,4 | 0,35 | 1,6; SiC 10–30 µm |
| 22 | Edelkorund | 36N | 1,4 | 0,35 | 1,8; Edelkorund 10–30 µm |
| 2A (Vergleich) | Edelkorund | | – | – | – |
| 2B (Vergleich) | Edelkorund, keramisiert | handelsübl. Qualität A | n.b. | n.b. | $Fe_2O_3$ |
| 3 | Halbedelkorund | 24SN | 1,6 | 0,5 | 2,6; Halbedelkorund 30–50 µm |
| 3A (Vergleich) | Halbedelkorund | | – | – | – |
| 3B (Vergleich) | Halbedelkorund keramisiert | handelsübl. Qualität A | n.b. | n.b. | $Fe_2O_3$ |
| 3C (Vergleich) | Halbedelkorund | handelsübl. Qualität B | n.b. | n.b. | $Fe_2O_3$ |

In Tabelle 2 sind die gemessenen Biegepruchfestigkeiten der untersuchten Materialien in Abhängigkeit von der Dauer der Nasslagerung angegeben. Die besten Festigkeitswerte weisen im untersuchten Zeitintervall die Materialien, wie sie in den erfindungsgemässen Beispielen 1, 21, 22 und 3 eingesetzt wurden, auf.

**Tabelle 2**

| Nasslagerung h Beispiel | Biegebruchfestigkeit $(N \cdot cm^{-2})$ | | | | |
|---|---|---|---|---|---|
| | 24 | 168 | 336 | 504 | 672 |
| 1 | 2280 | 1780 | 1580 | – | 1460 |
| 1A | 1230 | 910 | 900 | – | 820 |
| 1B | 1510 | 1220 | 1160 | – | 1100 |
| 21 | 2110 | 1900 | 1740 | – | 1630 |
| 22 | 2220 | 2030 | 1860 | – | 1750 |
| 2A | 1510 | 1530 | 1010 | – | 870 |
| 2B | 1410 | 1360 | 1190 | – | 1140 |
| 3 | 3170 | 2410 | 1960 | 1870 | 1730 |
| 3A | 2080 | 1280 | 960 | 800 | 780 |
| 3B | 2790 | 1690 | 1400 | 1360 | 1310 |
| 3C | 2600 | 1710 | 1400 | 1340 | 1280 |

Das Feinkorn der erfindungsgemäßen Beispiele 1, 21, 22 und 3 entspricht nicht dem Wortlaut des Hauptanspruchs.

## Patentansprüche

1. Korund-Schleifkorn mit keramischer Ummantelung aus 0,25 bis 2 Gew.-%, bezogen auf das Gewicht des unbehandelten Kornes, einer gemahlenen Glasfritte, einem Bindemittel und 1 bis 5 Gew.-% eines schleifaktiven Feinkorns in der Ummantelung, dessen größte Abmessung 1 bis 10% des mittleren Durchmessers des Ausgangskornes entspricht, gekennzeichnet durch eine größte Abmessung des schleifaktiven Feinkorns von 10 µm sowie eine daraus resultierende im wesentlichen glatte und nahezu porenfreie keramisierte Oberfläche.

2. Korund-Schleifkorn nach Anspruch 1, dadurch gekennzeichnet, daß als Feinkorn schleifaktiver Edelkorund in der Ummantelung vorliegt.

**Claims**

1. Corundum abrasive grain with ceramic coating of 0.25 to 2% by weight related to the weight of the untreated grain, of a ground glass frit, a binder and a content of 1 to 5% by weight of an abrasion active fine grain in the coating the largest dimension of which corresponds to 1 to 10% of the mean diameter of the original grain, characterised by a largest dimension of the abrasion active fine grain of 10 /um as well as an essentially smooth and almost pore free vitrified surface resulting therefrom.

2. Corundum abrasive grain according to claim 1, characterised in that abrasion active special fused alumina is present in the coating as fine grain.

**Revendications**

1. Grain abrasif de corindon avec un enrobage céramique de 0.25 à 2% en poids, par rapport au poids du grain non traité, du schiste de verre broyé, d'un liant et une teneur dans l'enrobage à 1 à 5% en poids d'un grain fin abrasif la dimension maximum duquel corresponde à 1 à 10% du diamètre moyen du grain de départ, caractérisé par une dimension maximum du grain fin abrasif de 10 /um ainsi que par la surface céramisée essentiellement lisse et presque exempte de pores qui en résulte.

2. Grain abrasif de corindon, selon la revendication 1, caractérisé en ce que le grain fin présent dans l'enrobage est d'oxyde d'aluminium spécial abrasif.